# EUROPÄISCHE PATENTSCHRIFT

(11) **EP 2 844 424 B1**
(45) Veröffentlichungstag und Bekanntmachung des Hinweises auf die Patenterteilung: **25.05.2016**
(21) Anmeldenummer: 13744420.4
(22) Anmeldetag: 03.05.2013
(51) Int. Cl.: B23P 15/10, F02F 3/00, F16J 1/00, B23K 20/12, F02F 3/22

(54) **VERFAHREN ZUR HERSTELLUNG EINES KOLBENS FÜR EINEN VERBRENNUNGSMOTOR**
METHOD FOR PRODUCING A PISTON FOR AN INTERNAL COMBUSTION ENGINE
PROCÉDÉ DE FABRICATION D'UN PISTON POUR UN MOTEUR À COMBUSTION INTERNE

(30) Priorität: 05.05.2012 DE 102012008947
(43) Veröffentlichungstag der Anmeldung: 11.03.2015
(73) Patentinhaber: MAHLE International GmbH, 70376 Stuttgart (DE)
(72) Erfinder: SCHARP, Rainer, 71665 Vaihingen (DE)
(74) Vertreter: BRP Renaud & Partner mbB Rechtsanwälte Patentanwälte Steuerberater
(86) Internationale Anmeldenummer: PCT/DE2013/000241
(87) Internationale Veröffentlichungsnummer: WO 2013/167105

(56) Entgegenhaltungen:
- US-A1- 2011 107 997
- US-A1- 2012 037 113

## Beschreibung

Die vorliegende Erfindung betrifft ein Verfahren zur Herstellung eines Kolbens für einen Verbrennungsmotor mit einem Kolbengrundkörper und einem Kolbenringelement, wobei der Kolbengrundkörper zumindest einen Kolbenschaft und zumindest einen Bodenbereich einer Verbrennungsmulde aufweist, wobei das Kolbenringelement einen Kolbenboden, zumindest einen Wandbereich der Verbrennungsmulde, einen umlaufenden Feuersteg und zumindest einen Teil einer mit Ringnuten versehenen umlaufenden Ringpartie aufweist und wobei der Kolbengrundkörper und das Kolbenringelement einen umlaufenden geschlossenen Kühlkanal bilden.

Ein gattungsgemäßer Kolben ist bspw. aus der Offenlegungsschrift US 2011/0107997 A1 bekannt. Derartige Kolben können sehr flache und große Verbrennungsmulden aufweisen, insbesondere wenn sie für Nutzfahrzeuge hergestellt werden. Die Rohlinge des Kolbengrundkörpers und des Kolbenringelements werden zum einen bevorzugt durch ein Schmiedeverfahren hergestellt und zum anderen bevorzugt mittels eines Reibschweißverfahrens gefügt, wobei entlang der Fügenähte Reibschweißwulste entstehen. Bei Kolben mit flachen und großen Brennraummulden ist es jedoch schwierig, im Kolbengrundkörper durch ein Schmiedeverfahren eine Fügefläche auszubilden, die im Wesentlichen einem Rohrende gleicht und mit der Fügefläche des Kolbenringkörpers korrespondiert.

Die Aufgabe der vorliegenden Erfindung besteht darin, ein Herstellungsverfahren für einen gattungsgemäßen Kolben bereitzustellen, das es ermöglicht, für alle Bauformen von Kolbengrundkörper und Kolbenringelement die Rohlinge mittels eines Schmiedeverfahrens herzustellen und das zugleich die Verwendung eines Reibschweißverfahrens zum Fügen der Rohlinge ermöglicht.

Die Lösung besteht in einem Verfahren mit den folgenden Schritten: (a) Bereitstellen eines Rohlings des Kolbengrundkörpers, bei dem eine äußere umlaufende Fügefläche und eine innere umlaufende, in Richtung des Bodenbereichs der Verbrennungsmulde verbreiterte Fügefläche sowie ein zwischen beiden Fügeflächen umlaufender unterer Kühlkanalteil vorbearbeitet sind; (b) Bereitstellen eines Rohlings des Kolbenringelements, bei dem eine äußere ringförmige Fügefläche und eine innere ringförmige Fügefläche sowie ein zwischen beiden Fügeflächen umlaufender oberer Kühlkanalteil vorbearbeitet sind; (c) Fügen des Rohlings mit dem Rohling über ihre Fügeflächen zu einem Kolbenrohling, derart, dass zumindest im Bodenbereich der Verbrennungsmulde ein Teilbereich der verbreiterten Fügefläche des Rohlings frei stehen bleibt; (d) Nachbearbeiten und/oder Fertigbearbeiten des Kolbenrohlings zu einem Kolben unter Entfernen des Teils der verbreiterten Fügefläche.

Die erfindungsgemäße Idee besteht darin, die innere Fügefläche des Rohlings des Kolbengrundkörpers in Richtung der Verbrennungsmulde zu verbreitern. Diese Fügefläche ist somit größer bemessen als die entsprechende innere Fügefläche des Rohlings des Kolbenringelements. Sie gleicht nicht mehr wie bisher einem Rohrende, sondern ist im Wesentlichen als Ringplatte und damit wesentlich weniger filigran ausgebildet, als es bisher im Stand der Technik der Fall ist. Diese strukturell einfache Ausbildung der inneren umlaufenden Fügefläche des Rohlings des Kolbengrundkörpers gestattet es, den Rohling mittels eines Schmiedeverfahrens herzustellen. Zugleich erlaubt es das erfindungsgemäße Verfahren, die Rohlinge mittels eines Reibschweißverfahrens zu fügen, da der dabei im Bereich der Verbrennungsmulde auftretende Reibschweißwulst sich oberhalb der frei stehen bleibenden Fügefläche ausbreiten und beim Nach- bzw. Fertigbearbeiten auf einfache Weise entfernt werden kann. Schließlich erlaubt es das erfindungsgemäße Verfahren, die Verbrennungsmulde nachträglich tiefer auszuarbeiten, falls dies zweckmäßig oder gewünscht ist. Somit können mit gleichen Rohlingen für den Kolbengrundkörper Kolben mit unterschiedlich tief ausgebildeten Verbrennungsmulden hergestellt werden. Das erlaubt es, die Herstellung der Kolbenrohlinge zu rationalisieren und somit die Herstellungskosten zu senken.

Vorteilhafte Weiterbildungen ergeben sich aus den Unteransprüchen.

Vorzugsweise wird in Schritt (a) bzw. Schritt (b) der Rohling und/oder der Rohling mittels eines Schmiedeverfahrens hergestellt und anschließend vorbearbeitet. Ferner wird in Schritt (c) der Rohling mit dem Rohling vorzugsweise mittels eines Reibschweißverfahrens unter Bildung mindestens einer Reibschweißnaht gefügt. Diese Herstellungsverfahren sind besonders geläufig und seit langer Zeit bewährt.

Eine besonders bevorzugte Weiterbildung sieht vor, dass vor dem Fügen mittels eines Reibschweißverfahrens vor dem Schritt (c) umlaufende Aufweitungen an der inneren und äußeren Fügefläche des Rohlings und/oder an der inneren und äußeren Fügefläche des Rohlings angebracht werden. Die Fügeflächen werden somit derart ausgebildet, dass ein Bereich der Fügeflächen während des Reibschweißens überschüssigen Werkstoff aufnehmen kann. Die typischen eingerollten Reibschweißwulste können somit nicht entstehen.

Die Aufweitungen können beliebig ausgeformt sein, bspw. in Form einer Schrägfläche, einer Fase oder einer Mulde. Die Aufweitungen können bspw. mit einer axialen Erstreckung von 1,0 mm bis 1,5 mm und/oder mit einer radialen Erstreckung von mindestens 0,5 mm ausgeformt sein.

Die Rohlinge werden zweckmäßigerweise aus einem Vergütungsstahl oder einem ausscheidungshärtenden Stahl hergestellt. In diesem Fall ist es von besonderem Vorteil, wenn die Rohlinge vor Schritt (c) vergütet und in Schritt (c) unter Bildung einer Wärmeeinflusszone im Bereich der mindestens einen Reibschweißnaht (25, 26, 125, 126) gefügt werden sowie nach Schritt (c) der resultierende Kolbenrohling durch Anlassen oder Spannungsarmglühen unter Erhalt der Wärmeeinflusszone(n) wärmebehandelt wird. Bei diesem Verfahren erfolgt in an sich bekannter Weise eine Aufhärtung des Werkstoffs der Rohlinge in der näheren Umgebung der Reibschweißnähte. Die Härte steigt in diesem Bereich um bis zu 400 HV (Vickers). Dieser aufgehärtete Bereich wird als "Wärmeeinflusszone" bezeichnet. Die Wärmeeinflusszone ist härter als der vergütete Werkstoff des Kolbenrohlings außerhalb der Wärmeeinflusszone. Eine Vergütung nach dem Fügen durch Reibschweißen ist nicht mehr erforderlich. Stattdessen wird der aus dem Reibschweißen resultierende Kolbenrohling nur noch einem Anlassen oder einem Spannungsarmglühen unterzogen, um eventuell vorhandene Spannungen abzubauen. Dabei sinkt die Härte in der Wärmeeinflusszone etwas ab, es verbleibt jedoch eine Aufhärtung mit einer Härte von bis zu 200 HV (Vickers). Da die Härte des vergüteten Werkstoffs des Kolbenrohlings außerhalb der Wärmeeinflusszone durch das Anlassen bzw. Spannungsarmglühen ebenfalls etwas absinkt, bleibt die Wärmeeinflusszone im Wesentlichen erhalten. Die Wärmeeinflusszone im fertigen Kolben ist also ein Bereich rund um die Reibschweißnaht, der eine größere Vickers-Härte aufweist als der restliche Werkstoff des Kolbens.

Diese Wärmeeinflusszone kann zur von Teilbereichen bzw. Teilstrukturen des Kolbens genutzt, die einem verstärkten Verschleiß unterliegen. Zu diesem Zweck wird die Reibschweißnaht bzw. werden die mittels Reibschweißen zu verbindenden Fügeflächen der Rohlinge der Kolbenbauteile so positioniert, dass die Teilbereiche bzw. Teilstrukturen des herzustellenden Kolbens, die einem verstärkten Verschleiß unterliegen und daher gehärtet werden sollen, nach dem Reibschweißen in der Wärmeeinflusszone liegen. Damit ist es nicht mehr erforderlich, diese Teilbereiche bzw. Teilstrukturen einem separaten Härtungsverfahren, wie Nitrieren oder Laserstrahlbehandlung, zu unterziehen.

Ausführungsbeispiele der vorliegenden Erfindung werden im Folgenden anhand der beigefügten Zeichnungen näher erläutert. Es zeigen in einer schematischen, nicht maßstabsgetreuen Darstellung:
- Fig. 1: ein Ausführungsbeispiel von Rohlingen zur Herstellung eines gattungsgemäßen Kolbens nach dem Stand der Technik;
- Fig. 2: ein erstes Ausführungsbeispiel von Rohlingen, aus denen nach dem erfindungsgemäßen Verfahren ein Kolben hergestellt wird, wobei die rechte Hälfte der Figur gegenüber der linken Hälfte um 90° gedreht ist;
- Fig. 3: ein erstes Ausführungsbeispiel eines mittels eines Reibschweißverfahrens gefügten Kolbenrohlings aus den Rohlingen gemäß Figur 2, wobei die rechte Hälfte der Figur gegenüber der linken Hälfte um 90° gedreht ist;
- Fig. 4: ein erstes Ausführungsbeispiel eines fertig bearbeiteten Kolbens aus dem Kolbenrohling gemäß Figur 3, wobei die rechte Hälfte der Figur gegenüber der linken Hälfte um 90° gedreht ist;
- Fig. 5: ein weiteres Ausführungsbeispiel von Rohlingen, aus denen nach dem erfindungsgemäßen Verfahren ein Kolben hergestellt wird, wobei die rechte Hälfte der Figur gegenüber der linken Hälfte um 90° gedreht ist;
- Fig. 6: ein weiteres Ausführungsbeispiel eines mittels eines Reibschweißverfahrens gefügten Kolbenrohlings aus den Rohlingen gemäß Figur 5, wobei die rechte Hälfte der Figur gegenüber der linken Hälfte um 90° gedreht ist;
- Fig. 7: ein weiteres Ausführungsbeispiel eines fertig bearbeiteten Kolbens aus dem Kolbenrohling gemäß Figur 6, wobei die rechte Hälfte der Figur gegenüber der linken Hälfte um 90° gedreht ist;
- Fig. 8: eine vergrößerte Teildarstellung eines weiteren Ausführungsbeispiels von Rohlingen, aus denen nach dem erfindungsgemäßen Verfahren ein Kolben hergestellt wird.

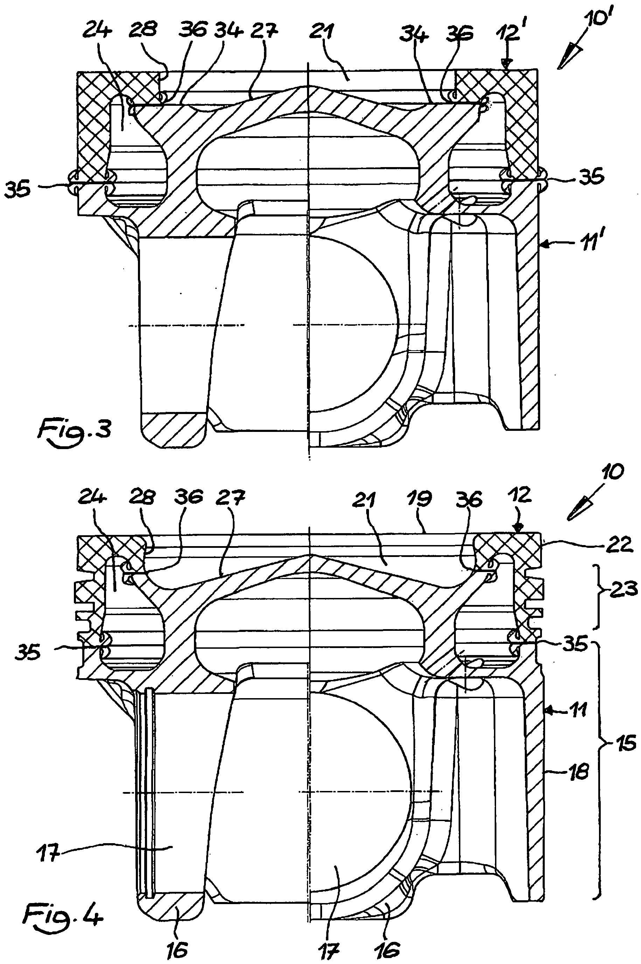

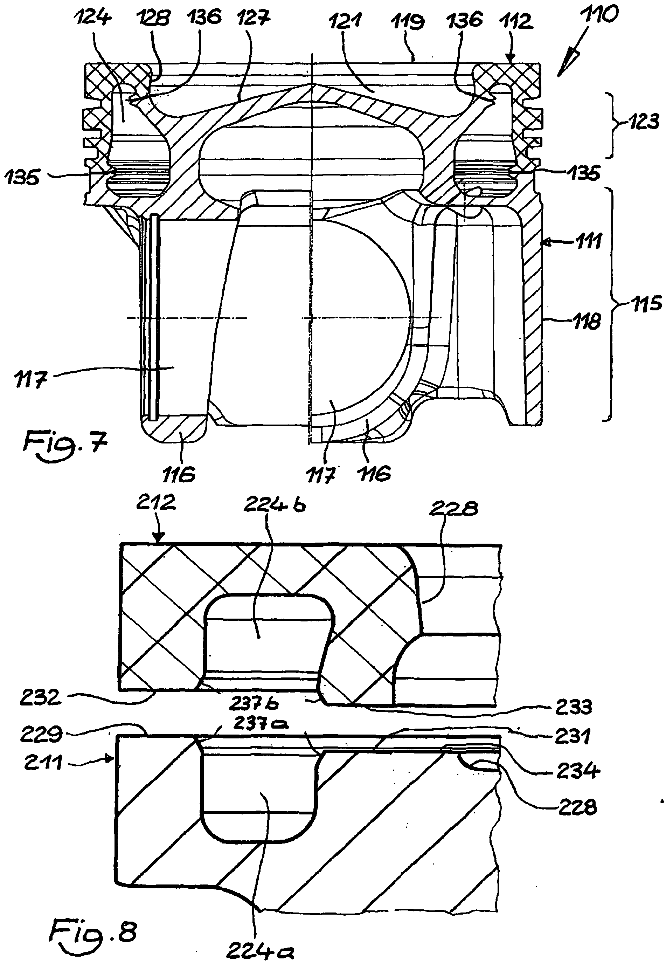

Die Figuren 4 und 7 zeigen einen fertigen Kolben 10, 110, der gemäß dem erfindungsgemäßen Verfahren mittels eines Reibschweißverfahrens hergestellt wurde. Der Kolben 10, 110 besteht aus einem Kolbengrundkörper 11, 111 und einem Kolbenringelement 12, 112. Beide Bauteile können aus jedem metallischen Werkstoff bestehen, der zum Reibschweißen geeignet ist und sind über Reibschweißnähte 35, 36, 135, 136 miteinander verbunden.

Im Ausführungsbeispiel besteht der Kolbengrundkörper aus einem Stahlwerkstoff, bspw. 42CrMo4. Der Kolbengrundkörper 11, 111 weist einen Kolbenschaft 15, 115 auf, der in an sich bekannter Weise mit Kolbennaben 16, 116 und Nabenbohrungen 17, 117 zur Aufnahme eines Kolbenbolzens (nicht dargestellt) sowie Laufflächen 18, 118 versehen ist. Das Kolbenringelement 12, 112 ist im Ausführungsbeispiel ebenfalls aus einem Stahlwerkstoff, bspw. 38MnVS6, hergestellt. Das Kolbenringelement 12, 112 weist einen Kolbenboden 19, 119 mit einer Verbrennungsmulde 21, 121 sowie einen umlaufenden Feuersteg 22, 122 und eine umlaufende Ringpartie 23, 123 zur Aufnahme von Kolbenringen (nicht dargestellt) auf. Der Kolbengrundkörper 11, 111 und das Kolbenringelement 12, 112 bilden gemeinsam einen umlaufenden geschlossenen Kühlkanal 24, 124.

Der Kolben 10 gemäß Figur 4 wird mittels des nachfolgend beschriebenen erfindungsgemäßen Verfahrens herstellt.

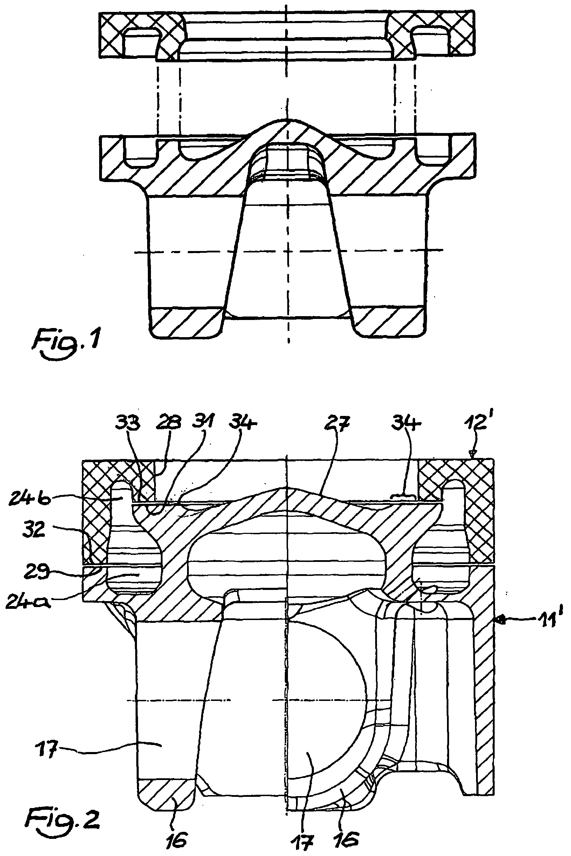

Gemäß Figur 2 wird zunächst ein vorbearbeiteter Rohling 11' eines Kolbengrundkörpers 11 sowie ein vorbearbeiteter Rohling 12' eines Kolbenringelements 12 bereitgestellt. Die Rohlinge 11', 12' sind im Ausführungsbeispiel mittels eines Schmiedeverfahrens hergestellt. Anschließend wurden die Rohlinge 11', 12' vorbearbeitet. Hierbei wurde in den Rohling 11' im Ausführungsbeispiel der Bodenbereich 27 der Verbrennungsmulde 21 eingearbeitet, bspw. eingedreht. Ferner wurde ein umlaufender unterer Kühlkanalteil 24a des Kühlkanals 24 vorbearbeitet. Daraus ergeben sich eine äußere umlaufende Fügefläche 29 und eine innere umlaufende Fügefläche 31. Erfindungsgemäß ist die innere Fügefläche 31 in Richtung des Bodenbereichs 27 verbreitert, wie es sich besonders deutlich aus dem Vergleich mit den in Figur 1 dargestellten Kolbenrohling gemäß dem Stand der Technik ergibt.

In den Rohling 12' ist im Ausführungsbeispiel der Wandbereich 28 der Verbrennungsmulde 21 eingearbeitet, bspw. eingedreht. Ferner ist ein umlaufender oberer Kühlkanalteil 24b des Kühlkanals 24 eingearbeitet. Daraus ergeben sich eine äußere umlaufende Fügefläche 32 und eine innere umlaufende Fügefläche 33. Die äußere Fügefläche 29 des Rohlings 11' korrespondiert mit der äußere Fügefläche 32 des Rohlings 12'. In entsprechender Weise korrespondiert die innere, verbreiterte Fügefläche 31 des Rohlings 11' mit der inneren Fügefläche 33 des Rohlings 12'. Das bedeutet, dass die beiden Rohlinge 11', 12' entlang ihrer Fügeflächen 29, 31 bzw. 32, 33 miteinander zu einem Kolbenrohling 10' verbunden werden können.

Wie in Figur 2 deutlich zu erkennen ist, insbesondere im Vergleich zum Stand der Technik gemäß Figur 1, korrespondieren die innere, verbreiterte Fügefläche 31 des Rohlings 11' und die innere Fügefläche 33 des Rohlings 12' erfindungsgemäß derart miteinander, dass ein zum Bodenbereich 27 der Verbrennungsmulde 21 hin gerichteter Teilbereich 34 der Fügefläche 31 frei stehen bleibt.

Zum Verbinden der beiden Rohlinge 11', 12' werden diese in an sich bekannter Weise fluchtend gespannt und mittels eines Reibschweißverfahrens gefügt. Ein Ausführungsbeispiel eines Reibschweißverfahrens sieht vor, dass einer der beiden Rohlinge 11', 12' in Rotation versetzt wird, bis eine Drehzahl von 1.500 U/min bis 2.500 U/min erreicht ist. Nun werden die Rohlinge 11', 12' über ihre Fügeflächen 29, 31 bzw. 32, 33 miteinander in Kontakt gebracht und unter einem Anpressdruck, bezogen auf die Fügeflächen 29, 31 bzw. 32, 33, von 10 N/mm² bis 30 N/mm² zusammengedrückt. Die Rotationsbewegung und der Anpressdruck erzeugen eine Reibung, welche die Fügeflächen 29, 31 bzw. 32, 33 aufheizt. Die Drehzahl und der Anpressdruck werden abhängig von den verwendeten Werkstoffen so gewählt, dass sich die Fügeflächen 29, 31 bzw. 32, 33 auf eine Temperatur nahe dem Schmelzpunkt des Werkstoffs bzw. der Werkstoffe erwärmen. Wenn dies erreicht ist (je nach Werkstoff bzw. Werkstoffen nach 1 bis 3 Sekunden), wird die Rotation unter Beibehaltung des Anpressdrucks beendet, d.h. die Spannvorrichtung wird so schnell wie möglich (möglichst innerhalb weniger als 1 Sekunde) abgebremst und angehalten. Während dieses Vorgangs wird der Anpressdruck beibehalten. Nach dem Anhalten wird der Anpressdruck auf einen Fügedruck, bezogen auf die Fügeflächen 29, 31 bzw. 32, 33 von 100 N/mm² bis 140 N/mm² erhöht, und die Rohlinge 11', 12' werden etwa 5 Sekunden unter diesem Fügedruck zusammengepresst.

Figur 3 zeigt den so gefertigten Kolbenrohling 10'. Der Kolbenrohling 10' weist als Ergebnis des oben beschriebenen Reibschweißvorgangs Reibschweißnähte 35, 36 auf.

Der Kolbenrohling 10' wird in an sich bekannter Weise, abhängig von der Ausbildung der Rohlinge 11', 12', nachgearbeitet bzw. fertigbearbeitet. Bspw. können Außenform, Oberflächen, Verbrennungsmulde, Ringpartie, Nabenbohrungen, etc. fertig bearbeitet werden. Erfindungsgemäß wird der frei stehende Teilbereich 34 der Fügefläche 31 entfernt, vorzugsweise durch Ausdrehen. Im Zuge dieses Verfahrensschritts werden der Bodenbereich 27 und der Wandbereich 28 der Verbrennungsmulde 21 fertig bearbeitet. Hierbei kann die Tiefe der Verbrennungsmulde 21 im Zuge der Entfernung des Teilbereichs 34 der Fügefläche 31 frei gewählt werden. Somit können mit baugleichen Rohlingen 11' für den Kolbengrundkörper 11 Kolben 10 mit Verbrennungsmulden 21 unterschiedlicher Tiefe hergestellt werden. Im Ergebnis erhält man den oben beschriebenen fertigen Kolben 10 gemäß Figur 4.

Die Rohlinge 11', 12' können aus einem Vergütungsstahl oder einem ausscheidungshärtenden Stahl hergestellt und vor dem Fügen vergütet werden. Beim Fügen durch Reibschweißen bildet sich rund um die entstandenen Reibschweißnähte 35, 36 jeweils eine Wärmeeinflusszone. Die Wärmeeinflusszonen erstrecken sich oberhalb und unterhalb der Reibschweißnähte 35, 36 über jeweils etwa 1 bis 3 mm. Im Bereich der Wärmeeinflusszonen ist die Härte des Werkstoffs um etwa 400 HV (Vickers) gegenüber dem vergüteten Werkstoff der Rohlinge 11', 12' außerhalb der Wärmeeinflusszonen erhöht. Der resultierende Kolbenrohling 10' wird dann nach dem Reibschweißen einer Wärmebehandlung, nämlich einem Anlassen oder einem Spannungsarmglühen, unterzogen. Diese Wärmebehandlung führt dazu, dass die Härte des Werkstoffs sowohl in den Wärmeeinflusszonen als auch außerhalb der Wärmeeinflusszonen um etwa 200 HV (Vickers) reduziert wird. Die Härteunterschied zwischen den härteren Wärmeeinflusszonen und dem restlichen Werkstoff der Rohlinge 11', 12' bleibt somit dauerhaft erhalten.

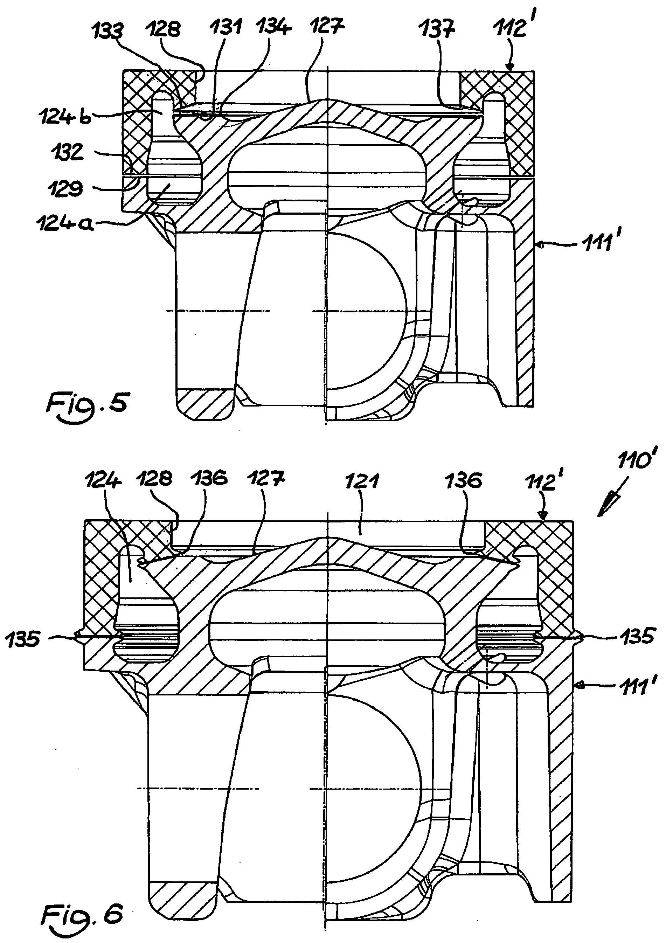

Figur 5 zeigt ein weiteres Ausführungsbeispiel eines Rohlings 111' eines Kolbengrundkörpers 111 sowie eines Rohlings 112' eines Kolbenringelements 112 für einen erfindungsgemäßen Kolben 110. Die Rohlinge 111', 112' sind im Ausführungsbeispiel mittels eines Schmiedeverfahrens hergestellt. Anschließend wurden die Rohlinge 111', 112' vorbearbeitet. Hierbei wurde in den Rohling 111' im Ausführungsbeispiel der Bodenbereich 127 der Verbrennungsmulde 121 eingearbeitet, bspw. eingedreht. Ferner wurde ein umlaufender unterer Kühlkanalteil 124a des Kühlkanals 124 vorbearbeitet. Daraus ergeben sich eine äußere umlaufende Fügefläche 129 und eine innere umlaufende Fügefläche 131. Erfindungsgemäß ist die innere Fügefläche 131 in Richtung des Bodenbereichs 127 verbreitert, wie es sich besonders deutlich aus dem Vergleich mit den in Figur 1 dargestellten Kolbenrohling gemäß dem Stand der Technik ergibt.

In den Rohling 112' ist im Ausführungsbeispiel der Wandbereich 128 der Verbrennungsmulde 121 eingearbeitet, bspw. eingedreht. Ferner ist ein umlaufender oberer Kühlkanalteil 124b des Kühlkanals 124 eingearbeitet. Daraus ergeben sich eine äußere umlaufende Fügefläche 132 und eine innere umlaufende Fügefläche 133. Die äußere Fügefläche 129 des Rohlings 111' korrespondiert mit der äußere Fügefläche 132 des Rohlings 112'. In entsprechender Weise korrespondiert die innere, verbreiterte Fügefläche 131 des Rohlings 111' mit der inneren Fügefläche 133 des Rohlings 112'. Das bedeutet, dass die beiden Rohlinge 111', 112' entlang ihrer Fügeflächen 129, 131 bzw. 132, 133 miteinander zu einem Kolbenrohling 110' verbunden werden können.

Wie in Figur 5 deutlich zu erkennen ist, insbesondere im Vergleich zum Stand der Technik gemäß Figur 1, korrespondieren die innere, verbreiterte Fügefläche 131 des Rohlings 111' und die innere Fügefläche 133 des Rohlings 112' erfindungsgemäß derart miteinander, dass ein zum Bodenbereich 127 der Verbrennungsmulde 121 hin gerichteter Teilbereich 134 der Fügefläche 131 frei stehen bleibt.

Bei diesem Ausführungsbeispiel ist an der inneren Fügeflächen 133 des Rohlings 112' des Kolbenringelements 112 jeweils eine umlaufende Aufweitung 137 in Form einer Schräge ausgeformt. Die Aufweitung137 öffnet sich in Richtung des Bodenbereichs 127 der Verbrennungsmulde 121. Die maximale axiale Erstreckung der Aufweitung 137 beträgt im Ausführungsbeispiel jeweils etwa 1 mm. Wenn die Fügeflächen 129, 131 bzw. 132, 133 der Rohlinge 111', 112' zu Beginn des oben beschriebenen Reibschweißvorgangs miteinander in Kontakt kommen, bilden die Aufweitungen 137 im Ausführungsbeispiel einen Freiraum in Form eines rechtwinkligen Dreiecks mit einer maximalen axialen Erstreckung von etwa 1 mm, in dem sich der aufgeschmolzene Werkstoff verteilt Hierbei wird der überschüssige Werkstoff in den oben beschriebenen Fugen aufgenommen. Selbstverständlich können auch Aufweitungen mit unterschiedlicher Geometrie miteinander kombiniert werden.

Die Rohlinge 111, 112 werden mittels des oben beschriebenen Reibschweißverfahrens gefügt. Figur 6 zeigt den so gefertigten Kolbenrohling 110'. Der Kolbenrohling 110' weist als Ergebnis des oben beschriebenen Reibschweißvorgangs Reibschweißnähte 135, 136 auf. Der Figur 6 ist ferner zu entnehmen, dass entlang der Reibschweißnähte135, 136 keine Reibschweißwulste, wie sie in Figur 3 dargestellt sind, entstanden sind. Der beim oben beschriebenen Reibschweißvorgang freigesetzte aufgeschmolzene überschüssige Werkstoff wurde während des Reibschweißvorgangs von der aus der Aufweitung 137 gebildeten Freiraum aufgenommen.

Der Kolbenrohling 110' wird in an sich bekannter Weise, abhängig von der Ausbildung der Rohlinge 111', 112', nachgearbeitet bzw. fertigbearbeitet. Bspw. können Außenform, Oberflächen, Verbrennungsmulde, Ringpartie, Nabenbohrungen, etc. fertig bearbeitet werden. Erfindungsgemäß wird der frei stehende Teilbereich 134 der Fügefläche 131 entfernt, vorzugsweise durch Ausdrehen. Im Zuge dieses Verfahrensschritts werden der Bodenbereich 127 und der Wandbereich 128 der Verbrennungsmulde 121 fertig bearbeitet. Hierbei kann die Tiefe der Verbrennungsmulde 121 im Zuge der Entfernung des Teilbereichs 134 der Fügefläche 131 frei gewählt werden. Somit können mit baugleichen Rohlingen 111' für den Kolbengrundkörper 111 Kolben 110 mit Verbrennungsmulden 121 unterschiedlicher Tiefe hergestellt werden. Im Ergebnis erhält man den oben beschriebenen fertigen Kolben 110 gemäß Figur 7.

Figur 8 zeigt eine vergrößerte Teildarstellung eines weiteren Ausführungsbeispiels von Rohlingen 211, 212, aus denen nach dem erfindungsgemäßen Verfahren ein Kolben hergestellt wird. Bei diesem Ausführungsbeispiel sind an beiden Fügeflächen 229, 231 des Rohlings 211' sowie an beiden Fügeflächen 232, 233 des Rohlings 212' jeweils eine umlaufende Aufweitung 237a, 237b in Form einer Fase ausgeformt. Die Aufweitungen 237a erstrecken sich in Richtung des Kühlkanalteils 224a des Rohlings 211'. In entsprechender Weise erstrecken sich die Aufweitungen 237b in Richtung des Kühlkanalteils 224b des Rohlings 212'. Die maximale axiale Erstreckung der Aufweitungen 237a, 237b beträgt im Ausführungsbeispiel jeweils etwa 1,0 mm, während die radiale Erstreckung der Aufweitungen 237a, 237b jeweils etwa 0,5 mm beträgt. Wenn die Fügeflächen 229, 231 bzw. 232, 233 der Rohlinge 211', 212' zu Beginn des oben beschriebenen Reibschweißvorgangs miteinander in Kontakt kommen, bilden die Aufweitungen 237a, 237b im Ausführungsbeispiel zwei einander gegenüberliegende Fugen mit einer maximalen axialen Erstreckung von etwa 2 mm, die überschüssigen Werkstoff aufnehmen können. Selbstverständlich können auch Aufweitungen mit unterschiedlicher Geometrie miteinander kombiniert werden.

## Patentansprüche

1. Verfahren zur Herstellung eines Kolbens (10, 110) für einen Verbrennungsmotor mit einem Kolbengrundkörper (11, 111) und einem Kolbenringelement (12, 112), wobei der Kolbengrundkörper (11, 111) zumindest einen Kolbenschaft (15, 115) und zumindest einen Bodenbereich (27, 127) einer Verbrennungsmulde (21, 121) aufweist, wobei das Kolbenringelement (12, 112) einen Kolbenboden (19, 119), zumindest einen Wandbereich (28, 128) der Verbrennungsmulde (21, 121), einen umlaufenden Feuersteg (22, 122) und zumindest einen Teil einer mit Ringnuten versehenen umlaufenden Ringpartie (23, 123) aufweist und wobei der Kolbengrundkörper (11, 111) und das Kolbenringelement (12, 112) einen umlaufenden geschlossenen Kühlkanal (24, 124) bilden, **gekennzeichnet durch** die folgenden Verfahrensschritte:
(a) Bereitstellen eines Rohlings (11', 111', 211') des Kolbengrundkörpers (11, 111), bei dem eine äußere umlaufende Fügefläche (29, 129, 229) und eine innere umlaufende, in Richtung des Bodenbereichs (27, 127) der Verbrennungsmulde (24, 124) verbreiterte Fügefläche (31, 131, 231) sowie ein zwischen beiden Fügeflächen (29, 31; 129, 131; 229, 231) umlaufender unterer Kühlkanalteil (24a, 124a, 224a) vorbearbeitet sind,
(b) Bereitstellen eines Rohlings (12', 112', 212') des Kolbenringelements (12, 112), bei dem eine äußere ringförmige Fügefläche (32,132, 232) und eine innere ringförmige Fügefläche (33, 133, 133) sowie ein zwischen beiden Fügeflächen (32, 33; 132, 133; 232, 233) umlaufender oberer Kühlkanalteil (24b, 124b, 224b) vorbearbeitet sind,
(c) Fügen des Rohlings (11', 111', 211) mit dem Rohling (12', 112', 212) über ihre Fügeflächen (29, 129, 229; 31, 131, 231; 32, 132, 232; 33, 133, 232) zu einem Kolbenrohling (10', 110'), derart, dass zumindest im Bodenbereich (27, 127) der Verbrennungsmulde (24, 124) ein Teilbereich (34, 134, 234) der verbreiterten Fügefläche (31, 131, 231) des Rohlings (11',111', 211) frei stehen bleibt,
(d) Nachbearbeiten und/oder Fertigbearbeiten des Kolbenrohlings (10', 110') zu einem Kolben (10,110) unter Entfernen des Teilbereichs (34, 134, 234) der verbreiterten Fügefläche (31, 131, 231).

2. Verfahren nach Anspruch 1, **dadurch gekennzeichnet, dass** in Schritt (a) bzw. Schritt (b) der Rohling (11', 111', 211') und/oder der Rohling (12', 112', 212') mittels eines Schmiedeverfahrens hergestellt und anschließend vorbearbeitet werden.

3. Verfahren nach Anspruch 1, **dadurch gekennzeichnet, dass** in Schritt (c) der Rohling (11', 111', 211') mit dem Rohling (12', 112', 212') mittels eines Reibschweißverfahrens unter Bildung mindestens einer Reibschweißnaht (35, 36, 135, 136) gefügt werden.

4. Verfahren nach Anspruch 3, **dadurch gekennzeichnet, dass** vor dem Schritt (c) umlaufende Aufweitungen (137; 237a, 237b) an einer inneren und/oder äußeren Fügefläche (133, 229, 231, 232, 233) des Rohlings (111', 211') und/oder des Rohlings (112', 212') angebracht werden.

5. Verfahren nach Anspruch 4, **dadurch gekennzeichnet, dass** die mindestens eine umlaufende Aufweitung (137; 237a, 237b) in Form einer Schrägfläche, einer Fase oder einer Mulde ausgeformt wird.

6. Verfahren nach Anspruch 4, **dadurch gekennzeichnet, dass** die umlaufenden Aufweitungen (137; 237a, 237b) mit einer axialen Erstreckung von 1,0 mm bis 1,5 mm und/oder mit einer radialen Erstreckung von mindestens 0,5 mm ausgeformt werden.

7. Verfahren nach Anspruch 3, **dadurch gekennzeichnet, dass** der Rohling (11', 111', 211') und der Rohling (12', 112', 212') aus einem Vergütungsstahl oder einem ausscheidungshärtenden Stahl hergestellt werden.

8. Verfahren nach Anspruch 7, **dadurch gekennzeichnet, dass** vor dem Schritt (c) die Rohlinge (11', 111', 211',12', 112', 212') vergütet werden, dass in Schritt (c) die Rohlinge (11', 111', 211',12', 112', 212') unter Bildung einer Wärmeeinflusszone im Bereich der mindestens einen Reibschweißnaht (35, 36, 135, 136) gefügt werden und dass nach dem Schritt (c) der Kolbenrohling (10', 110') durch Anlassen oder Spannungsarmglühen unter Erhalt der Wärmeeinflusszone(n) wärmebehandelt wird.

## Claims

1. A process for producing a piston (10, 110) for an internal combustion engine having a piston base body (11, 111) and a piston ring element (12, 112), whereby the piston base body (11, 111) has at least a piston shaft (15, 115) and at least a bottom area (27, 127) of a combustion cavity (21, 121), whereby the piston ring element (12, 112) has a piston head (19, 119), at least one wall area (28, 128) of the combustion cavity (21, 121), a circumferential top land (22, 122) and at least an encircling ring part (23, 123) provided with an annular groove, and whereby the piston base body (11, 111) and the piston ring element (12, 112) form a circumferential closed cooling duct (24, 124), **characterized by** the following process steps:
(a) provision of a blank (11', 111', 211') of the piston base body (11, 111), whereby an outer circumferential joining surface (29, 129, 229) and an inner circumferential widened joining surface (31, 131, 231) in the direction of the bottom area (27, 127) of the combustion cavity (24, 124), as well as an encircling lower cooling duct part (24a, 124a, 224a) between the two joining surfaces (29, 31; 129,131; 229, 231) are premachined,
(b) provision of a blank (12', 112', 212') of the piston ring element (12, 112), whereby an outer annular joining surface (32, 132, 232) and an inner annular joining surface (33, 133, 133) and an upper encircling cooling duct part (24b, 124b, 224b) between both joining surfaces (32, 33; 132, 133; 232, 233) are premachined,
(c) joining of the blank (11', 111', 211) with the blank (12', 112', 212) on their joining surfaces (29, 129, 229; 31, 131, 231; 32, 132, 232; 33, 133, 232) to produce a piston blank (10', 110'), such that at least in the bottom region (27, 127) of the combustion cavity (24, 124) a portion (34, 134, 234) of the enlarged joining surface (31, 131, 231) of the blank (11', 111', 211) is left free,
(d) post-processing and/or finishing of the piston blank (10', 110') to a piston (10, 110) while removing the partial area (34, 134, 234) of the enlarged joining surface (31, 131, 231).

2. A process according to claim 1, **characterized in that** in step (a) or step (b) the blank (11', 111', 211') and/or the blank (12', 112', 212') is produced by means of a forging process and then pre-processed.

3. A process according to claim 1, **characterized in that** in step (c) the blank (11', 111', 211') is joined with the blank (12', 112', 212') by means of a friction welding process to form at least one friction weld (35, 36, 135, 136).

4. A process according to claim 3, **characterized in that** prior to step (c) peripheral widenings (137; 237a, 237b) are attached on an inner and/or outer joining surface (133, 229, 231, 232, 233) of the blank (111', 211') and/or the blank (112', 212').

5. A process according to claim 4, **characterized in that** the at least one peripheral widening (137; 237a, 237b) is formed in the shape of an inclined surface, a chamfer or a recess.

6. A process according to claim 4, **characterized in that** the peripheral widenings (137; 237a, 237b) are formed with an axial extension of 1.0 mm to 1.5 mm and/or with a radial extension of at least 0.5 mm.

7. A process according to claim 3, **characterized in that** the blank (11', 111', 211') and the blank (12', 112', 212') are produced from a piece of tempered steel or precipitation hardened steel.

8. A process according to claim 7, **characterized in that** prior to step (c) the blanks (11', 111', 211', 12', 112', 212') are tempered, **in that** in step (c) the blanks (11', 111', 211', 12', 112', 212') are joined to form a heat-affected zone in the area of at least one friction weld (35, 36, 135,136), and **in that** after step (c) the piston blank (10', 110') is heat-treated by annealing or stress-relief annealing to give the heat-affected zone(s).

## Revendications

1. Procédé servant à fabriquer un piston (10, 110) pour un moteur à combustion interne, comprenant un corps de base de piston (11, 111) et un élément formant un segment de piston (12, 112), le corps de base de piston (11, 111) présentant au moins une tige de piston (15, 115) et au moins une zone de fond (27, 127) d'une cavité de combustion (21, 121), l'élément formant un segment de piston (12, 112) présentant un fond de piston (19, 119), au moins une zone de paroi (28, 128) de la cavité de combustion (21, 121), un cordon de feu (22, 122) périphérique et au moins une proportion d'une partie de segment (23, 123) périphérique pourvue de rainures de segment, et le corps de base de piston (11,111) et l'élément formant un segment de piston (12, 112) formant un canal de refroidissement (24, 124) fermé périphérique, **caractérisé par** les étapes de procédé qui suivent consistant à :
a) fournir une ébauche (11', 111', 211') du corps de base de piston (11, 111), pour lequel une surface d'assemblage (29, 129, 229) périphérique extérieure et une surface d'assemblage (31, 131, 231) périphérique intérieure, élargie en direction de la zone de fond (27, 127) de la cavité de combustion (24, 124), ainsi qu'une proportion de canal de refroidissement (24a, 124a, 224a) inférieure périphérique située entre les deux surfaces d'assemblage (29, 31; 129, 131; 229, 231) sont préalablement usinées ;
b) fournir une ébauche (12', 112', 212') de l'élément formant un segment de piston (12, 112), pour lequel une surface d'assemblage (32, 132, 232) extérieure présentant une forme de segment et une surface d'assemblage (33, 133, 133) intérieure présentant une forme de segment ainsi qu'une proportion de canal de refroidissement (24b, 124b, 224b) supérieure périphérique située entre les deux surfaces d'assemblage (32, 33 ; 132, 133 ; 232, 233) sont préalablement usinées;
(c) assembler l'ébauche (11', 111', 211) à l'ébauche (12', 112' 212) par l'intermédiaire de leurs surfaces d'assemblage (29, 129, 229 ; 31, 131, 231; 32, 132, 232 ; 33, 133, 232) pour obtenir une ébauche de piston (10', 110') de telle manière qu'une zone partielle (34, 134, 234) de la surface d'assemblage (31, 131, 231) élargie de l'ébauche (11', 111', 211) reste dégagée au moins dans la zone de fond (27, 127) de la cavité de combustion (24, 124) ;
(d) usiner ultérieurement et/ou finaliser l'ébauche de piston (10', 110') pour obtenir un piston (10, 110) en retirant la zone partielle (34, 134, 234) de la surface d'assemblage (31, 131, 231) élargie.

2. Procédé selon la revendication 1, **caractérisé en ce qu'**à l'étape (a) ou à l'étape (b), l'ébauche (11', 111', 211') et/ou l'ébauche (12', 112', 212') sont fabriquées au moyen d'un procédé de forgeage et sont immédiatement après préalablement usinées.

3. Procédé selon la revendication 1, **caractérisé en ce qu'**à l'étape (c), l'ébauche (11', 111', 211') est assemblée à l'ébauche (12', 112', 212') au moyen d'un procédé de soudage par friction en formant au moins un cordon de soudage par friction (35, 36, 135, 136).

4. Procédé selon la revendication 3, **caractérisé en ce qu'**avant l'étape (c), des élargissements (137 ; 237a, 237b) périphériques sont pratiqués au niveau d'une surface d'assemblage intérieure et/ou au niveau d'une surface d'assemblage extérieure (133, 229, 231, 232, 233) de l'ébauche (111', 211') et/ou de l'ébauche (112', 212').

5. Procédé selon la revendication 4, **caractérisé en ce que** l'élargissement (137 ; 237a, 237b) périphérique au moins au nombre de un est formé sous la forme d'une surface oblique, d'un chanfrein ou d'une cavité.

6. Procédé selon la revendication 4, **caractérisé en ce que** les élargissements (137 ; 237a, 237b) périphériques sont formés avec une extension axiale allant de 1,0 mm à 1,5 mm et/ou avec une extension radiale d'au moins 0,5 mm.

7. Procédé selon la revendication 3, **caractérisé en ce que** l'ébauche (11', 111', 211') et l'ébauche (12', 112', 212') sont fabriquées à partir d'un acier d'amélioration ou à partir d'un acier à durcissement par précipitation.

8. Procédé selon la revendication 7, **caractérisé en ce qu'**avant l'étape (c) les ébauches (11', 111', 211', 12', 112', 212') sont améliorées, **en ce qu'**à l'étape (c) les ébauches (11', 111', 211', 12', 112', 212') sont assemblées en formant une zone affectée par la chaleur dans la zone du cordon de soudure par friction (35, 36, 135, 136) au moins au nombre de un, et **en ce qu'**après l'étape (c) l'ébauche de piston (10', 110') est traitée à chaud par revenu ou par recuit léger de détensionnement en obtenant la/les zone(s) affectée(s) par la chaleur.
